# EUROPÄISCHE PATENTSCHRIFT

(11) **EP 1 918 626 B1**
(45) Veröffentlichungstag und Bekanntmachung des Hinweises auf die Patenterteilung: **03.03.2010**
(21) Anmeldenummer: 06022207.2
(22) Anmeldetag: 24.10.2006
(51) Int. Cl.: F16L 55/04

(54) **Speicher zur Dämpfung von Druckpulsationen**
Accumulator for damping pressure pulsations
Accumulateur pour l'amortissement de pulsations de pression

(43) Veröffentlichungstag der Anmeldung: 07.05.2008
(73) Patentinhaber: Carl Freudenberg KG, 69469 Weinheim (DE)
(72) Erfinder: Käsler, Richard, Dr., 53424 Remagen (DE); Auen, Stefan, 53424 Remagen (DE); Schäfer, Georg, 53123 Bonn (DE)

(56) Entgegenhaltungen:
- EP-A1- 1 150 003
- JP-A- 8 004 702
- JP-A- 10 019 001
- JP-A- 11 315 802
- US-A1- 2 899 975
- US-A1- 3 139 115

## Beschreibung

### Technisches Gebiet

Die Erfindung betrifft einen Speicher zur Dämpfung von Druckpulsationen, umfassend ein Gehäuse, wobei das Gehäuse ein erstes Volumen begrenzt, innerhalb dessen ein Balg aufgenommen ist, wobei der Balg ein zweites Volumen begrenzt, welches durch Verformung des Balgs veränderbar ist, und wobei der Balg einstückig ausgebildet ist.

### Stand der Technik

Speicher der eingangs genannten Art sind aus der DE 103 27 408 A1 bekannt. Insbesondere zeigt Fig. 9 der genannten Druckschrift einen gattungsbildenden Speicher, dessen Balg aus verschiedenen Segmenten zusammengesetzt ist. Die Segmente sind in ihren Randbereich miteinander verschweißt und verleimen dem Balg daher eine charakteristische Biegesteifigkeit.

Bei dem gattungsbildenden Speicher ist nachteilig, dass dessen Fertigung sehr aufwändig ist, da die einzelnen Segmente aufeinander abgestimmt und miteinander verschweißt werden müssen. Beim Schweißen muss besonders genau dafür Sorge getragen werden, dass alle Schweißnähte möglichst identisch ausgeführt werden, um ein symmetrisches Verformen des Balgs zu erlauben.

Nachteilig ist insbesondere, dass unterschiedliche Schweißnähte zu unterschiedlichen Biegesteifigkeiten führen, so dass eine Verformung des Balges mit Verkippungen und Verdrillungen einher gehen kann. Hierdurch wird die Lebensdauer des Balgs deutlich verringert, da die Schweißnähte ungleichmäßig belastet werden. Die Folge hiervon können Leckagen des zweiten Volumens sein, nämlich des Volumens, das durch den Balg eingeschlossen wird. Die Leckagen führen zu einem Druckverlust, so dass die Funktionsfähigkeit des gattungsgemäßen Balgs schon nach kurzer Betriebsdauer nicht mehr gewährleistet sein kann.

Aus der JP 11 315802 A ist ein Speicher mit den Merkmalen des Oberbegriffs des Patentanspruchs 1 bekannt. Aus der EP 1 150 003 A1 ist eine Kraftstoffleiste bekannt, die in einer zylindrischen Aufnahme ein Dämpfungselement führt. Aus der JP 10 019001 A und der JP 08 004702 A sind ebenfalls Speicher mit den Merkmalen des Oberbegriffs des Patentanspruchs 1 bekannt.

### Darstellung der Erfindung

Der vorliegenden Erfindung liegt daher die Aufgabe zugrunde, einen Speicher zur Dämpfung von Druckpulsationen der eingangs genannten Art derart auszugestalten und weiterzubilden, dass dieser nach einfacher Fertigung eine störungsfreie Verwendung bei langer Lebensdauer gewährleistet.

Die zuvor aufgezeigte Aufgabe ist durch einen Speicher zur Dämpfung von Druckpulsationen mit den Merkmalen des Patentanspruchs 1 gelöst. Danach ist ein Speicher der eingangs genannten Art **dadurch gekennzeichnet, dass** der Balg aus einer metallischen Lage gefertigt ist, die eine Dicke von 0,1 bis 0,3 mm aufweist.

In erfindungsgemäßer Weise ist erkannt worden, dass bei einstückiger Ausbildung des Balgs auf Schweißprozesse verzichtet werden kann. Die einstückige Ausbildung des Balges gewährleistet des Weiteren eine homogene, über den gesamten Balg gleichmäßig verteilte Biegesteifigkeit. Die Verformbarkeit des einstückig ausgestalteten Balges wird daher allein durch die Eigensteifigkeit des verwendeten Materials bestimmt und gerade nicht durch die Eigensteifigkeiten einzelner Segmente sowie diese verbindende Schweißnähte. Die Einstückigkeit des Balges stellt des Weiteren sicher, dass keine Leckagen aufgrund von Fügestellen wie Schweißnähten auftreten können. Schließlich erlaubt die Einstückigkeit des Balges eine kostengünstige Fertigung des erfindungsgemäßen Speichers. Im Ergebnis kombiniert die Verwendung eines einstückigen Balges eine problemlose und kostengünstige Fertigung mit einer langen Lebensdauer des Balgmaterials, welches nicht durch Schweißnähte geschwächt ist.

Der Balg ist aus einer metallischen Lage gefertigt, die eine Dicke von 0,1 bis 0,3 mm aufweist. Ganz konkret ist denkbar, dass als metallische Lage ein Edelstahlblech oder ein Stahlblech verwendet wird. Überraschenderweise hat sich gezeigt, dass eine metallische Lage der genannten Dicke problemlos Drücken von 200 bis 300 bar standhalten kann und letztlich sogar Druckspitzen, welche durch Verformung des Balgs auftreten, beschädigungsfrei überstehen kann. Schließlich zeigt eine metallische Lage eine sehr geringe Eigensteifigkeit und erlaubt dem Gasvolumen innerhalb des Balgs nach dessen Komprimierung eine problemlose Expandierung. Die Expandierung des Gasvolumens wird nahezu nicht durch die Materialeigenschaften des Balgs behindert bzw. beeinflusst. Folglich ist die eingangs genannte Aufgabe gelöst.

Der Balg könnte durch formgebende Verfahren hergestellt werden. Durch diese Art der Herstellung wird vorteilhaft die Einstückigkeit des Balges sichergestellt, wobei Fügestellen am Balg, insbesondere an den Falten, vermieden werden. Der Balg könnte durch Drehen, Fräsen, Schmieden, Pressen, Tiefziehen oder Gießen hergestellt werden.

Der Balg könnte gefaltet sein. Dabei ist denkbar, dass die Falten spitz zulaufend oder abgerundet ausgebildet sind. Spitz zulaufende Falten können in einfacher Weise durch Verpressen einer Lage hergestellt werden. Abgerundete Falten führen zu einer besonders hohen Lebensdauer des Balgs, da diese im Gegensatz zu spitzen Falten nicht zu Sollbruchstellen neigen. Durch die Rundung der Falten wird das Material beim Verformen und Bewegen nicht übermäßig beansprucht. Schließlich hat die Ausbildung von Falten den Vorteil, dass die Verformbarkeit des Balgs erleichtert und definiert vorgegeben wird.

Der Balg könnte Falten aufweisen, deren Faltenberge orthogonal zur Verformungsrichtung des Balgs orientiert sind. Dabei ist denkbar, dass der Balg in Längsrichtung komprimierbar ist, wobei die Faltenberge in Querrichtung, also orthogonal zur Längsrichtung, abragen. Diese konkrete Ausgestaltung führt zu einer besonders problemlosen Deformierbarkeit des Balgs.

Der Balg könnte ein Volumen einschließen, welches mit einem Gas befüllt ist. Dieses Gas steht üblicherweise im unbelasteten Zustand des Speichers unter einem Druck von 10 bis 200 bar, um auftretende Druckpulsationen eines fluidführenden Systems kompensieren zu können. Im belasteten Zustand können im Mittel Drücke von bis zu 250 bar auftreten, denen Druckpulsationen mit einer Amplitude von bis zu 100 bar überlagert sind. Insoweit können Spitzendrücke von bis zu 350 bar auftreten. Ein Speicher, in dessen Balg ein Druck von 10 bis 200 bar im unbelasteten Zustand herrscht, eignet sich in besonderer Weise für die Verwendung in Direkteinspritzsystemen von Kraftfahrzeugen. In Direkteinspritzsystemen von Kraftfahrzeugen treten nämlich die zuvor beschriebenen starken Druckpulsationen auf, welche überraschenderweise besonders vorteilhaft durch die hier beschriebene Balganordnung gedämpft und nahezu eliminiert werden können.

Dem Speicher könnten Mittel zur Führung des Balgs zugeordnet sein. Durch die Vorkehrung von Mitteln zur Führung des Balgs bei dessen Verformung wird ein definiertes und gerichtetes Verformen des Balgs sichergestellt. Durch die Vorkehrung von solchen Mitteln wird auch eine Verkippung oder Verdrillung des Balgmaterials nahezu ausgeschlossen. Hierdurch wird die Lebensdauer des Speichers erheblich erhöht. Vor diesem Hintergrund ist denkbar, dass innerhalb der Gehäusewandung Rillen, Nuten oder ähnliche Mittel ausgebildet sind, um den Balg zu führen.

Die Mittel könnten einen Führungsring umfassen, der einem beweglichen Ende des Balgs zugeordnet ist. Diese konkrete Ausgestaltung erlaubt ein präzises Führen des Balgs sowie eine gleitende, reibungsoptimierte Bewegung des Führungsrings an der Gehäuseinnenwandung.

Der Balg könnte mit einem Ende am Gehäuse festgelegt sein. Diese konstruktive Ausgestaltung trägt zur Stabilität der Balgführung beim Verformen des Balgs bei. Durch die Festlegung eines Endes des Balgs am Gehäuse, wird verhindert, dass dieser lose innerhalb des ersten Volumens in seiner Gesamtheit bewegt wird und dadurch Beschädigungen unterliegen könnte.

Der Balg könnte zylinderförmig ausgebildet sein, wobei die Enden des Balgs verschlossen sind. Diese konkrete Ausgestaltung erlaubt eine kostengünstige Fertigung des Balgs, da die rotationssymmetrische Ausgestaltung fertigungstechnisch problemlos realisierbar ist. Vor diesem Hintergrund ist denkbar, dass der Balg aus einer metallischen Hülse oder Tülle gefertigt wird, in dem dieser Falten oder ähnliche Strukturen aufgeprägt werden, um deren Verformungsverhalten vorzugeben. Durch Verschließen der Enden der Tülle bzw. des Balgs kann innerhalb des Balgs ein Gasvolumen unter Druck eingeschlossen werden.

Dem beweglichen Ende des Balgs könnte ein Anschlag zugeordnet sein. Der Anschlag bewirkt vorteilhaft, dass der Balg in seiner Endlage stabilisiert und dessen Bewegung gedämpft wird. Der Anschlag kann nämlich derart ausgestaltet sein, dass im ersten Volumen eine Kammer ausgebildet wird, in welcher ein Fluid, insbesondere eine Flüssigkeit, aufnehmbar ist. Dieses Fluid kann zum Gasdruck innerhalb des Balgs einen Gegendruck aufbauen und damit Verformungen des Balgs verhindern und dessen Bewegung dämpfen. Hierdurch werden Schädigungen des Balgs weitgehend vermieden. Ohne Anschlag besteht die Gefahr, dass der Gasdruck den Balg in der Endlage schädigt. Insoweit fungiert der Anschlag als untere Endlagensicherung.

Zum Abfangen hoher Druckspitzen könnte dem Balg zusätzlich oder in Alleinstellung eine obere Endlagensicherung zugeordnet sein. Die Endlagensicherung könnte ein Fluid, insbesondere eine Flüssigkeit, umfassen, welches der unteren Endlagensicherung abgewandt ist. Ein inkompressibles Fluid, nämlich eine Flüssigkeit, könnte die Verformung des Balgs begrenzen, wenn dieser zusammengedrückt wird. Bei sehr hohen Drücken könnte das Gas derart komprimiert sein, dass zwischen dem Gasdruck und dem Fluiddruck ein Gleichgewicht besteht. Das Fluid könnte in einer oberen Kammer angeordnet sein.

Dem beweglichen Ende des Balgs könnte ein Anschlag aus einem Elastomer zugeordnet sein. Diese konkrete Ausgestaltung trägt ebenfalls zur Erhöhung der Lebensdauer des Speichers bei, da beim Expandieren des im Balg eingeschlossenen Gases die Bewegung des Balgs nicht ruckartig sondern gedämpft abgebremst wird. Die gedämpfte Abbremsung des Balgs kann durch Wahl eines geeignet steifen Elastomers eingestellt werden. Ein leicht komprimierbares Elastomer kann zu einer besonders stark gedämpften Abbremsung eines sich bewegenden Balgs führen.

Das Gehäuse könnte einen Einlass zum ersten Volumen aufweisen. Der Einlass erlaubt den Eintritt von Fluiden in das erste Volumen, um mit dem im Balg eingeschlossenen Gas wechselzuwirken. Durch den Einlass können unter Druck stehende Fluide in das erste Volumen einschießen und das Gas innerhalb des Balgs komprimieren. Hierdurch werden Druckpulsationen innerhalb eines fluidführenden Systems wirksam gedämpft. Dem Einlass könnte ein Gewinde aufgeprägt sein, welches das Einschrauben des Speichers in vorgesehene Ausnehmungen eines Einspritzsystems von Kraftfahrzeugen erleichtert.

Das Gehäuse könnte zylindrisch ausgebildet sein und durch einen Balgstopfen verschlossen sein. Die zylindrische Ausbildung des Gehäuses erlaubt dessen problemlose Fertigung. Denkbar ist vor diesem Hintergrund, dass das Gehäuse durch einen Tiefziehprozess gefertigt wird. Der Balgstopfen kann zusammen mit dem Balg in das erste Volumen eingeführt werden und dieses durch Anlage des Balgstopfens am Gehäuse verschließen. Vor diesem Hintergrund ist auch denkbar, dass der Balgstopfen zusammen mit dem Balg und vorzugsweise auch dem Führungsring als einzelne Einheit in Volumina eines fluidführenden Systems eingeschraubt, eingeschweißt öder durch Umbördelung angeordnet werden.

Zwischen der Gehäusewandung und dem Balgstopfen könnte eine Dichtung angeordnet sein. Hierdurch wird eine Abdichtung des ersten Volumens besonders wirkungsvoll erzielt.

Der Balgstopfen könnte im Gehäuse durch Verschweißen, Verschrauben oder Umbördeln der Gehäusewandung festgelegt sein. Durch Verschweißen wird eine besonders feste Verbindung zwischen Gehäuse und Balgstopfen erzielt, die sich durch eine hohe Lebensdauer auszeichnet. Durch Verschrauben kann der Balgstopfen reversibel im Gehäuse angeordnet werden, so dass ein Austausch eines schadhaft gewordenen Balgs problemlos realisierbar ist. Durch Umbördeln der Gehäusewandung kann der Balgstopfen in einem besonders schnellen Fertigungsprozess festgelegt werden.

Dem Balgstopfen könnte ein Befüllpfropfen zugeordnet sein. Der Befüllpfropfen erlaubt, einen Druckverlust innerhalb des Balgs auszugleichen. Des Weiteren erlaubt ein Befüllpfropfen eine Veränderung bzw. Einstellung des Drucks innerhalb des zweiten Volumens. Denkbar ist vor diesem Hintergrund, dass der Befüllpfropfen nach Art eines Ventils ausgebildet ist, welches sich bei Überschreiten eines bestimmten Druckes innerhalb des Balgs öffnet und somit eine Beschädigung des Balgs verhindert.

Ein Speicher der zuvor beschriebenen Art könnte in Einspritzsystemen von Kraftfahrzeugen, insbesondere Direkteinpsritzsystemen, verwendet werden.

Überraschenderweise hat sich gezeigt, dass diese konkrete Verwendung eines Speichers der hier beschriebenen Art in vielerlei Hinsicht vorteilhaft ist. Es wird gleichzeitig eine Vergleichmäßigung der Strömungsverhältnisse und der Druckniveaus in den kraftstoffführenden Leitungen, bei geringerem Kraftstoffverbrauch, höherer Motorleistung, reduzierter Bauteilbelastung und geringerer Geräuschentwicklung bewirkt. Diese Wirkungen sind überraschenderweise besonders deutlich bei Verwendung eines Speichers mit einstückigem Balg aufgetreten.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der Erfindung an Hand der Zeichnung zu verweisen.

In Verbindung mit der Erläuterung bevorzugter Ausführungsbeispiele der Erfindung an Hand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Speicher mit einem Faltenbalg, dem ein Anschlag aus einem Elastomer zugeordnet ist, und
- Fig. 2: einen Speicher, bei welchem der Balgstopfen durch Umbördelung der Gehäusewandung festgelegt ist.

### Ausführung der Erfindung

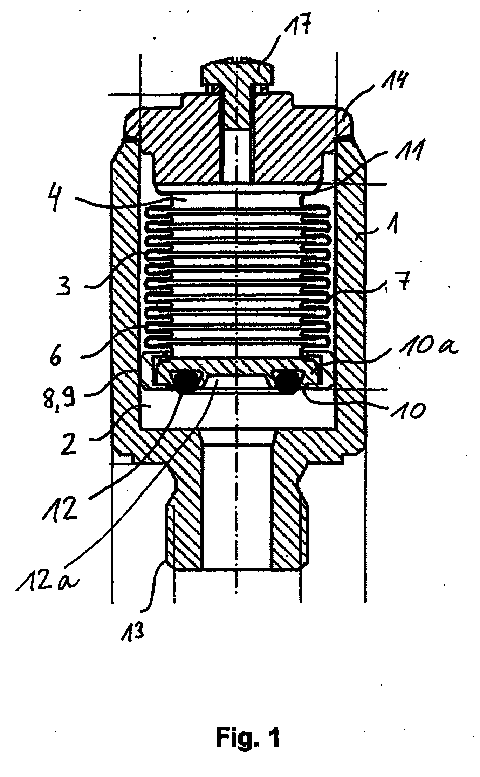

Fig. 1 zeigt einen Speicher zur Dämpfer von Druckpulsationen mit einem Gehäuse 1, wobei das Gehäuse 1 ein erstes Volumen 2 begrenzt, innerhalb dessen ein Balg 3 aufgenommen ist. Der Balg 3 begrenzt ein zweites Volumen 4, welches durch Verformung des Balgs 3 veränderbar ist. Der Balg 3 ist einstückig ausgebildet.

Der Balg 3 ist gefaltet und weist Falten 6 auf, deren Faltenberge 7 abgerundet sind und orthogonal zur Verformungsrichtung des Balgs 3 orientiert sind. Der Balg 3 ist längs der gestrichelten Linie komprimierbar.

Der Balg 3 besteht aus einer metallischen Lage, die eine Dicke von 0,1 bis 0,3 mm aufweist. Der Balg ist zylinderförmig ausgebildet, wobei dem Balgmaterial, nämlich der metallischen Lage, Falten aufgeprägt sind.

Der Speicher weist Mittel 8 zur Führung des Balgs 3 auf. Die Mittel 8 umfassen einen Führungsring 9, der dem beweglichen Ende 10 des Balgs 3 zugeordnet ist. Der Führungsring 9 ist im Querschnitt u-förmig ausgebildet und umschließt einen Verschluss 10a, welcher das bewegliche Ende 10 des Balgs 3 verschließt.

Der Führungsring 9 klemmt den Verschluss 10a und die letzte Falte des Balgs 3 zusammen und verbindet damit den Balg 3 mit dem Verschluss 10a.

Der Balg 3 ist mit dem Ende 11 am Gehäuse 1 festgelegt. Dabei ist das Ende 11 durch einen Balgstopfen 14 verschlossen, welcher zugleich ein Ende des Gehäuses 1 verschließt. Der Balg 3 ist mit dem Balgstopfen 14 derart verbunden, dass er als Einheit zusammen mit dem Balg 3 in das Gehäuse 1 einführbar ist. Das Gehäuse 1 ist überwiegend zylindrisch ausgebildet und schließt ein zylindrisches erstes Volumen 2 ein. Der Balgstopfen 14 ist mit dem Gehäuse 1 verschweißt. Dem Balgstopfen 14 ist ein Befüllpfropfen 17 zugeordnet, welcher ein Befüllen des zweiten Volumens 4 mit Gas erlaubt.

Das Gehäuse 1 weist einen Einlass 13 auf, durch welchen ein Fluid eines fluidführenden Systems, beispielsweise eines Einspritzsystems eines Kraftfahrzeuges, in das erste Volumen 2 einströmen kann. Beim Einströmen des Fluids komprimiert dieses das erste Volumen 4 und verformt dabei den Balg 3. Beim Verformen des Balgs 3 wird dieser längs der gestrichelten Linie bewegt.

Dem beweglichen Ende 10 des Balgs 3 ist ein Anschlag 12 zugeordnet. Der Anschlag 12 ist derart ausgebildet, dass er eine Kammer 12a zur Aufnahme einer Flüssigkeit ausbildet. Der Anschlag 12 bildet zusammen mit der Kammer 12a eine untere Endlagensicherung für den Balg 3, Der Anschlag 12 besteht aus einem Elastomer. Das Elastomer ist im konkreten Ausführungsbeispiel als Elastomerring ausgestaltet, der in einer im Querschnitt trapezförmigen Nut des Verschlusses 10a eingelegt ist. Die Trapezform der Nut verhindert das Herausfallen des Anschlags 12.

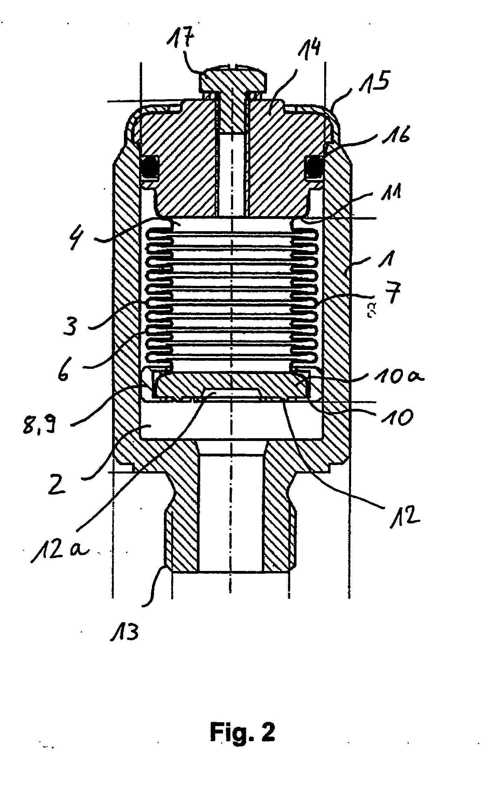

Fig. 2 zeigt einen Speicher, der einen ähnlichen Aufbau aufweist wie der Speicher gemäß Fig. 1,

Der Speicher gemäß Fig. 2 weist ebenfalls einen Anschlag 12 auf, der aus dem Verschluss 10a als Ausstülpung ausgeformt ist. Hierdurch wird eine Kammer 12a ausgebildet, die ein Fluid aufnehmen kann. Der Verschluss 10a fungiert zusammen mit dem Anschlag 12 und der Kammer 12a als untere Endlagensicherung für den Balg 3.

Der Speicher gemäß Fig. 2 weist einen Balgstopfen 14 auf, welcher durch Umbördelung der Gehäusewandung 15 im Gehäuse 1 festgelegt ist. Dabei schließt der Balgstopfen 15 zwischen sich und der Gehäusewandung eine Dichtung 16 ein. Die Dichtung 16 ist als Ring ausgebildet, welcher in einer Nut des Balgstopfens 14 ausgebildet ist.

Dem Balgstopfen 14 ist ein Befüllpfropfen 17 zugeordnet, welcher eine Befüllung des zweiten Volumens 4 mit Gas erlaubt. Das bewegliche Ende 10 des Balgs 3 ist durch einen Verschluss 10a verschlossen. Dem beweglichen Ende 10 des Balgs 3 ist ein Mittel zur Führung des Balgs zugeordnet. Die Mittel umfassen einen Führungsring 9, welcher im Querschnitt u-förmig ausgestaltet ist. Der Führungsring 9 gleitet an der Innenwandung des Gehäuse 1 und verhindert beim Verformen des Balgs 3 eine Verkippung oder Verdrillung desselben. Der Führungsring gemäß Fig. 2 erfüllt die gleichen Funktionen wie zu Fig. 1 beschrieben.

Der Balg 3 ist mit einem Ende am Balgstopfen 14 und damit am Gehäuse 1 festgelegt.

Abschließend sei ganz besonders hervor gehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Speicher zur Dämpfung von Druckpulsationen, umfassend ein Gehäuse (1), wobei das Gehäuse (1) ein erstes Volumen (2) begrenzt, innerhalb dessen ein Balg (3) aufgenommen ist, wobei der Balg (3) ein zweites Volumen (4) begrenzt, welches durch Verformung des Balgs (3) veränderbar ist, und wobei der Balg (3) einstückig ausgebildet ist,
**dadurch gekennzeichnet, dass** der Balg (3) aus einer metallischen Lage gefertigt ist, die eine Dicke von 0,1 bis 0,3 mm aufweist.

2. Speicher nach Anspruch 1, **dadurch gekennzeichnet, dass** der Balg (3) gefaltet ist.

3. Speicher nach Anspruch 1 oder 2, **dadurch gekennzeichnet, dass** der Balg (3) Falten (6) aufweist, deren Faltenberge (7) orthogonal zur Verformungsrichtung des Balgs (3) orientiert sind.

4. Speicher nach einem der Ansprüche 1 bis 3, **gekennzeichnet durch** Mittel (8) zur Führung des Balgs (3).

5. Speicher nach Anspruch 4, **dadurch gekennzeichnet, dass** die Mittel (8) einen Führungsring (9) umfassen, der einem beweglichen Ende (10) des Balgs (3) zugeordnet ist.

6. Speicher nach einem der Ansprüche 1 bis 5, **dadurch gekennzeichnet, dass** der Balg (3) mit einem Ende (11) am Gehäuse (1) festgelegt ist.

7. Speicher nach einem der Ansprüche 1 bis 6, **dadurch gekennzeichnet, dass** der Balg (3) zylinderförmig ausgebildet ist, wobei die Enden des Balgs (3) verschlossen sind.

8. Speicher nach einem der Ansprüche 1 bis 7, **dadurch gekennzeichnet, dass** dem beweglichen Ende (10) ein Anschlag (12) zugeordnet ist.

9. Speicher nach einem der Ansprüche 1 bis 8, **gekennzeichnet durch** mindestens eine Endlagensicherung (10a, 12, 12a), welche die Deformierung des Balgs (3) in mindestens einer Endlage begrenzt.

10. Speicher nach einem der Ansprüche 1 bis 9, **dadurch gekennzeichnet, dass** das Gehäuse (1) einen Einlass (13) zum ersten Volumen (2) aufweist.

11. Speicher nach einem der Ansprüche 1 bis 10, **dadurch gekennzeichnet, dass** das Gehäuse (1) zylindrisch ausgebildet ist und durch einen Balgstopfen (14) verschlossen ist.

12. Speicher nach Anspruch 11, **dadurch gekennzeichnet, dass** zwischen der Gehäusewandung (15) und dem Balgstopfen (14) eine Dichtung (16) angeordnet ist.

13. Speicher nach Anspruch 11 oder 12, **dadurch gekennzeichnet, dass** der Balgstopfen (14) im Gehäuse (1) durch Verschweißen, Verschrauben oder Umbördeln der Gehäusewandung (15) festgelegt ist.

14. Speicher nach einem der Ansprüche 11 bis 13, **dadurch gekennzeichnet, dass** dem Balgstopfen (14) ein Befüllpfropfen (17) zugeordnet ist.

15. Verwendung eines Speichers nach einem der voranstehenden Ansprüche in einem Einspritzsystem eines Kraftfahrzeugs.

## Claims

1. Accumulator for the damping of pressure pulsations, comprising a housing (1), the housing (1) delimiting a first volume (2), within which a concertina (3) is received, the concertina (3) delimiting a second volume (4) which can be varied as a result of the deformation of the concertina (3), and the concertina (3) being produced in one piece, **characterized in that** the concertina (3) is manufactured from a metallic ply which has a thickness of 0.1 to 0.3 mm.

2. Accumulator according to Claim 1, **characterized in that** the concertina (3) is folded.

3. Accumulator according to Claim 1 or 2,
**characterized in that** the concertina (3) has folds (6), the fold crests (7) of which are oriented orthogonally with respect to the deformation direction of the concertina (3).

4. Accumulator according to one of Claims 1 to 3, **characterized by** means (8) for guiding the concertina (3).

5. Accumulator according to Claim 4, **characterized in that** the means (8) comprise a guide ring (9) which is assigned to a movable end (10) of the concertina (3).

6. Accumulator according to one of Claims 1 to 5, **characterized in that** the concertina (3) is secured with one end (11) to the housing (1).

7. Accumulator according to one of Claims 1 to 6, **characterized in that** the concertina (3) is of cylindrical design, the ends of the concertina (3) being closed.

8. Accumulator according to one of Claims 1 to 7, **characterized in that** the movable end (10) is assigned a stop (12).

9. Accumulator according to one of Claims 1 to 8, **characterized by** at least one end-position safeguard (10a, 12, 12a) which limits the deformation of the concertina (3) in at least one end position.

10. Accumulator according to one of Claims 1 to 9, **characterized in that** the housing (1) has an inlet (13) to the first volume (2).

11. Accumulator according to one of Claims 1 to 10, **characterized in that** the housing (1) is of cylindrical design and is closed by means of a concertina plug (14).

12. Accumulator according to Claim 11, **characterized in that** a seal (16) is arranged between the housing wall (15) and the concertina plug (14).

13. Accumulator according to Claim 11 or 12, **characterized in that** the concertina plug (14) is secured in the housing (1) by welding, screwing or the flanging of the housing wall (15).

14. Accumulator according to one of Claims 11 to 13, **characterized in that** the concertina plug (14) is assigned a filling stopper (17).

15. Use of an accumulator according to one of the preceding claims in an injection system of a motor vehicle.

## Revendications

1. Accumulateur pour l'amortissement de pulsations de pression, comprenant un boîtier (1), le boîtier (1) limitant un premier volume (2), à l'intérieur duquel est reçu un soufflet (3), le soufflet (3) limitant un deuxième volume (4) qui peut être modifié par déformation du soufflet (3), et le soufflet (3) étant réalisé d'une seule pièce, **caractérisé en ce que** le soufflet (3) est fabriqué en une couche métallique qui présente une épaisseur de 0,1 à 0,3 mm.

2. Accumulateur selon la revendication 1, **caractérisé en ce que** le soufflet (3) est plié.

3. Accumulateur selon la revendication 1 ou 2, **caractérisé en ce que** le soufflet (3) présente des plis (6) dont les pics de plis (7) sont orientés perpendiculairement à la direction de déformation du soufflet (3).

4. Accumulateur selon l'une quelconque des revendications 1 à 3, **caractérisé par** des moyens (8) pour guider le soufflet (3).

5. Accumulateur selon la revendication 4, **caractérisé en ce que** les moyens (8) comprennent une bague de guidage (9) qui est associée à une extrémité mobile (10) du soufflet (3).

6. Accumulateur selon l'une quelconque des revendications 1 à 5, **caractérisé en ce que** le soufflet (3) est fixé au boîtier (1) par une extrémité (11).

7. Accumulateur selon l'une quelconque des revendications 1 à 6, **caractérisé en ce que** le soufflet (3) est réalisé sous forme cylindrique, les extrémités du soufflet (3) étant fermées.

8. Accumulateur selon l'une quelconque des revendications 1 à 7, **caractérisé en ce que** l'on associe une butée (12) à l'extrémité mobile (10).

9. Accumulateur selon l'une quelconque des revendications 1 à 8, **caractérisé par** au moins une fixation en position d'extrémité (10a, 12, 12a) qui limite la déformation du soufflet (3) dans au moins une position d'extrémité.

10. Accumulateur selon l'une quelconque des revendications 1 à 9, **caractérisé en ce que** le boîtier (1) présente une entrée (13) vers le premier volume (2) .

11. Accumulateur selon l'une quelconque des revendications 1 à 10, **caractérisé en ce que** le boîtier (1) est réalisé sous forme cylindrique et est fermé par un bouchon de soufflet (14).

12. Accumulateur selon la revendication 11, **caractérisé en ce que** l'on dispose entre la paroi du boîtier (15) et le bouchon de soufflet (14) un joint d'étanchéité (16).

13. Accumulateur selon la revendication 11 ou 12, **caractérisé en ce que** le bouchon de soufflet (14) est fixé dans le boîtier (1) par soudage, vissage ou rabattage de la paroi du boîtier (15).

14. Accumulateur selon l'une quelconque des revendications 11 à 13, **caractérisé en ce que** le bouchon de soufflet (14) est associé à un capuchon de remplissage (17).

15. Utilisation d'un accumulateur selon l'une quelconque des revendications précédentes, dans un système d'injection d'un véhicule automobile.
